# EUROPÄISCHE PATENTANMELDUNG

(11) **EP 3 541 038 A1**
(43) Veröffentlichungstag der Anmeldung: **18.09.2019**
(21) Anmeldenummer: 18162050.1
(22) Anmeldetag: 15.03.2018
(51) Int. Cl.: H04L 29/06, G06F 21/44, H04L 9/32

(54) **VERFAHREN UND VORRICHTUNG ZUR KRYPTOGRAPHISCH GESCHÜTZTEN DATENÜBERTRAGUNG ZWISCHEN EINEM ERSTEN GERÄT UND EINEM ZWEITEN GERÄT**

(71) Anmelder: Siemens Aktiengesellschaft, 80333 München (DE)
(72) Erfinder: Aschauer, Hans, 81829 München (DE); Falk, Rainer, 85586 Poing (DE); Fries, Steffen, 85598 Baldham (DE); Heintel, Markus, 81377 München (DE); Klasen, Wolfgang, 85521 Ottobrunn (DE); Pfau, Axel, 80333 München (DE); Sperl, Franz, 92526 Oberviechtach (DE); Trummer, Georg, 92224 Amberg (DE); Zwanzger, Johannes, 85579 Neubiberg (DE)

(57) **Zusammenfassung**

Die Erfindung beansprucht ein Verfahren zur kryptographisch geschützten Datenübertragung zwischen einem ersten Gerät (FD4; GW) und einem zweiten Gerät (FD5), aufweisend folgende Schritte:
- Erzeugen einer Sicherheitsinformation im ersten Gerät und Bereitstellen der Sicherheitsinformation,
- Übertragen von Daten zwischen dem ersten und dem zweiten Gerät über eine Datenübertragungsschnittstelle (N), welche kryptographisch mit Hilfe der Sicherheitsinformation geschützt werden, wenn die Sicherheitsinformation als zulässig und/oder als gültig überprüft worden ist,
- ansonsten physikalische Trennung der Datenübertragungsschnittstelle (N) zum zweiten Gerät.

## Beschreibung

Die Erfindung betrifft ein Verfahren zur kryptographisch geschützten Datenübertragung zwischen einem ersten Gerät und einem zweiten Gerät sowie zugehörige Vorrichtungen und ein Computerprogramm(produkt).

Es besteht ein Bedarf, um mit IT-Security-Mechanismen Produkte, beispielsweise Geräte (z.B. Steuergeräte, Internet-der-Dinge (IoT)-Geräte), Gerätekomponenten oder Softwarekomponenten, vor Manipulationen und/oder einem Reverse Engineering zu schützen. Kryptographische IT-Security-Mechanismen sind bereits beispielsweise in Smart Devices, beispielsweise in Geräten des Internets der Dinge (IoT), von cyberphysikalischen Systemen, von Automatisierungssystemen der Energietechnik, Bahntechnik oder von Fertigungssystemen, der Betriebstechnik und von anderen Anlagen in Einsatz.

Der Begriff "Security" bzw. "Sicherheit" bezieht sich im Rahmen der vorliegenden Beschreibung im Wesentlichen auf die Sicherheit bzw. Schutz, Vertraulichkeit und/oder Integrität von Daten sowie deren Übertragung und auch Sicherheit, Vertraulichkeit und/oder Integrität beim Zugriff auf entsprechende Daten. Auch die Authentifizierung bei Datenübertragungen beziehungsweise beim Datenzugriff gehört zum Begriff "Sicherheit", wie er im Rahmen der vorliegenden Beschreibung verwendet wird. Ein Modul kann hierbei als eine Hardware- und/oder Funktionseinheit, die software- und/oder firmwaremäßig ausgestaltet sein kann, ausgeprägt sein. Die Funktion kann beispielsweise mittels eines Prozessors und/oder einer Speichereinheit zum Speichern von Programmbefehlen ausgeführt werden.

Manipulationsgeschützt geht in der vorliegenden Beschreibung über den Begriff "Security" hinaus. Hierbei werden nicht nur die genannten kryptographischen bzw. Security-Methoden eingesetzt, sondern auch die Datenübertragung verlässlich gegen Angriffe bzw. Fremdzugriffe von außen geschützt.

Industrielle Geräte, z.B. Steuergeräte, Feldgeräte, Medizingeräte, IoT-Geräte oder IoT-Gateways, verwenden eine Mehrzahl von kryptographischen Schlüsseln, z.B. um sich zu authentisieren, um Kommunikationspartner, z.B. andere industrielle Geräte oder Service-Techniker zu authentisieren, um Integrität von gespeicherten Daten und Programmcode zu schützen, um Firmware-Updates zu prüfen und zu entschlüsseln und um die Integrität und ggf. die Vertraulichkeit von Projektierungs- und Konfigurationsdaten zu schützen. Um Daten, vor allem Steuerdaten, zu übertragen, können die genannten Geräte mit einer Datenschnittstelle ausgestattet sein, die drahtgebunden oder als Drahtlos-Schnittstelle, z.B. als eine WLAN-, eine Bluetooth- oder eine NFC-Schnittstelle (NFC: Near Field Communication) ausgebildet und eingerichtet sein kann. Mit Hilfe dieser Datenschnittstelle kann das Gerät an ein Netzwerk angebunden werden bzw. mit anderen Geräten kommunizieren. Desweiteren ist es möglich, die Kommunikation optisch beispielsweise über Lichtwellenleiter zu leiten.

Es sind weitere drahtlose bzw. funkbasierte Übertragungstechniken hierbei einsetzbar (z.B. Safety over WLAN wie z.B. ProfiSafe, WiMax, Cloud Robotics, GSM, UMTS, LTE, 5G, Vehicle-2-X-Communication für autonome Fahrzeuge bzw. autonomes Fahren, funkbasierte Zugsicherung ETCS). Auch kann funkbasiert eine Positionsinformationen (PVT: position, velocity, time) über ein Satellitennavigationssystem (GPS, Galileo, Beidou, Glonass) empfangen werden, die für eine Steuerungsfunktion des Geräts verwendet wird.

Verschlüsselungsgeräte werden verwendet, um eine Datenkommunikation über offene Netzwerke gegen Abhören und/oder Manipulation zu schützen. Es sind Verschlüsselungsprotokolle auf unterschiedlichen Protokollschichten bekannt, insbesondere MACsec (802.1ae, 802.1af), WLAN Encryption (IEEE 802.11 WPA2), Mobilfunkkommunikationssicherheit (2G, UMTS, LTE, 5G), IPsec/IKEv2, TLS, OpenVPN. Diese Protokolle können von speziellen Verschlüsselungsgeräten wie z.B. einem VPN-Gateway oder einem IoT-Gateway realisiert werden, oder ein Gerät (z.B. Feldgerät, Steuergerät, speicherprogrammierbare Steuerung, IO-Modul, Kommunikationsprozessor-Modul, IoT-Gerät) kann selbst eine kryptographisch geschützte Kommunikation realisieren.

Es besteht ein Bedarf, die korrekte Funktion einer kryptographisch geschützten Kommunikation sicherzustellen. Insbesondere soll mit hoher Verlässlichkeit gewährleistet sein, dass bei einem nicht-konfiguriertem oder ungültig konfigurierten Verschlüsselungsgerät unverschlüsselte oder fehlerhaft verschlüsselte Daten übertragen werden.

Es ist Aufgabe der vorliegenden Erfindung, Verfahren und Vor- bzw. Einrichtungen zur kryptographisch geschützten Datenübertragung zwischen einem ersten Gerät und einem zweiten Gerät mit gegenüber dem oben genannten Stand der Technik zu verbessern bzw. sicherzustellen.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Die Erfindung beansprucht ein Verfahren zur kryptographisch geschützten Datenübertragung zwischen einem ersten Gerät und einem zweiten Gerät, aufweisend folgende Schritte:
- Erzeugen einer Sicherheitsinformation im ersten Gerät und Bereitstellen der Sicherheitsinformation,
- Übertragen von Daten zwischen dem ersten und dem zweiten Gerät über eine Datenübertragungsschnittstelle, welche kryptographisch mit Hilfe der Sicherheitsinformation geschützt werden, wenn die Sicherheitsinformation als zulässig und/oder als gültig überprüft worden ist,
- ansonsten physikalische Trennung der Datenübertragungsschnittstelle zum zweiten Gerät.

Eine Sicherheitsinformation kann hierbei ein Schlüssel bzw. Ableitfunktion eines Schlüssels oder auch ein kryptographisch geschütztes Zertifikat sein, die für die Kommunikation mit dem zweiten Gerät bereitgestellt wird und vorzugsweise im ersten Gerät überprüft wird.

Somit wird mit hoher Verlässlichkeit sichergestellt, dass bei fehlender und/oder unzulässiger und/oder ungültiger Security- bzw. Sicherheits-Konfiguration, d.h. die Daten werden nicht ordnungsgemäß kryptographisch geschützt, keine Daten übertragen werden können.

Unter Erzeugen einer Sicherheitsinformation ist beispielsweise zu verstehen, dass ein kryptographischer Schlüssel durch das Gerät generiert wird, z.B. unter Nutzung eines True Random Number Generators, dass ein kryptographischer Schlüssel durch das Gerät mit einem Kommunikationspartner automatisch eingerichtet wird, z.B. über eine Pairing-Prozedur, die z.B. durch einen Konfigurationstastendruck (Push-Button-Konfiguration) oder durch ein PIN oder ein Passwort geschützt ist, oder indem eine Security-Konfiguration über eine Service-Schnittstelle durch das Gerät geladen wird, oder indem ein Konfigurationsmodul mit einer gespeicherten Sicherheitskonfiguration mit dem Gerät verbunden wird und die auf dem Konfigurationsmodul gespeicherte Sicherheitskonfiguration durch das Gerät ausgelesen oder benutzt wird.

Eine Weiterbildung der Erfindung sieht vor, dass neben der Sicherheitsinformation zusätzlich eine Übertragungsbedingung (z.B. Übertragungsqualität) für das Übertragen der Daten festgelegt wird oder die Sicherheitsinformation diese Übertragungsbedingung umfasst und das Übertragen der Daten zwischen erstem und zweitem Gerät nur dann durchgeführt wird, wenn die Übertragungsbedingung zusätzlich erfüllt ist. Als Übertragungsqualität ist die Signalstärke, Signalpegel, physikalischer Fingerabdruck des zweiten Geräts (z.B. Einschwingverhalten einer elektrischen oder optischen Sendeeinheit) denkbar.

Eine Weiterbildung der Erfindung sieht vor, dass die Datenübertragungsschnittstelle durch - Koppelung einer dem ersten Gerät zugeordneten ersten Datenübertragungseinheit mit einem dem zweiten Gerät zugeordneten zweiten Datenübertragungseinheit erreicht bzw. umgesetzt wird, wobei die erste Datenübertragungseinheit eine physikalisch von dem ersten Gerät trennbare Einrichtung ist und/oder die zweite Datenübertragungseinheit eine physikalisch von dem zweiten Gerät trennbare Einrichtung ist.

Eine Weiterbildung der Erfindung sieht vor, dass die physikalische Trennung der Datenübertragung mittels Deaktivierung der ersten und/oder zweiten Datenübertragungseinheit durchgeführt wird.

Eine Weiterbildung der Erfindung sieht vor, dass die physikalische Trennung der Datenübertragung mittels Abkopplung der ersten und/oder zweiten Datenübertragungseinheit von einer Stromversorgung durchgeführt wird.

Eine Weiterbildung der Erfindung sieht vor, dass die physikalische Trennung der Datenübertragung mittels eines Schalters bzw. Tasters durchgeführt wird. Der Schalter kann in die Datenübertragungseinheit integriert oder durch diese ansteuerbar sein. Die Unterbrechung betrifft dann mindestens eine Datenübertragungsleitung.

Eine Weiterbildung der Erfindung sieht vor, dass die Überprüfung auf Zulässigkeit und/oder Gültigkeit der Sicherheitsinformation eine Überprüfung auf ein Fehlen der Sicherheitsinformation und/oder eine Überprüfung auf eine fehlerhafte und/oder unvollständige Sicherheitsinformation und/oder eine Überprüfung auf eine abgelaufene Gültigkeitsdauer der Sicherheitsinformation umfasst.

Ein weiterer Aspekt der Erfindung ist eine Vorrichtung zur kryptographisch geschützten Datenübertragung zu einem Gerät, aufweisend:
- Mittel zum Erzeugen einer Sicherheitsinformation im ersten Gerät und Bereitstellen der Sicherheitsinformation,
- Mittel zum Übertragen von Daten zum Gerät über eine Datenübertragungsschnittstelle, welche kryptographisch mit Hilfe der Sicherheitsinformation schützbar sind oder geschützt werden, wenn die Sicherheitsinformation als zulässig und/oder als gültig überprüft ist,
- ansonsten physikalische Trennung der Datenübertragungsschnittstelle zum Gerät.

Mittel zur physikalischen Trennung der Datenübertragungsschnittstelle zum Gerät kommen zum Einsatz, wenn die Sicherheitsinformation unzulässig und/oder ungültig ist, das durch die Überprüfung festgestellt wird oder ist.

Die Mittel können Hardware-, Firmware und/oder Softwareeinheiten bzw. -module sein.

Unter Bereitstellen kann verstanden werden, dass die Sicherheitsinformation selbst den oben genannten Mitteln z.B. in Form einer Verarbeitungseinheit bzw. CPU bereitgestellt wird. Unter Bereitstellen kann ebenso verstanden werden, dass der Verarbeitungseinheit eine kryptographische Operation bereitgestellt wird, wobei die kryptographische Operation die bereitgestellte Sicherheitsinformation verwendet. Die kryptographische Operation kann insbesondere eine Verschlüsselung, eine Entschlüsselung, eine Bildung einer kryptographischen Prüfsumme (Message Authentication Code, digitale Signatur), eine Prüfung einer kryptographischen Prüfsumme oder eine Schlüsselableitung sein.

Des Weiteren wird ein Computerprogramm(produkt) umfassend Programm-Code, der von mindestens einem Prozessor ausgeführt werden kann und der bewirkt, dass der mindestens eine Prozessor das erfindungsgemäße Verfahren und dessen Ausführungsformen ausführt. Das Computerprogramm kann auf einer Vorrichtung der vorstehend genannten Art ablaufen oder als Computerprogrammprodukt auf einem computerlesbaren Medium gespeichert sein.

Zusätzlich kann eine Variante des Computerprogramm(produktes) mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine sein.

Die Vorrichtung und Computerprogramm(produkte) können entsprechend der Weiterbildungen/Ausführungsformen des vorgenannten Verfahrens und deren Weiterbildungen/Ausführungsformen ausgebildet sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigt in schematischer Darstellung:
Figur 1 schematisch eine (Funk-)Netzwerkumgebung, und
Figur 2 eine Verschlüsselungs- bzw. Entschlüsselungseinheit KD, in der das erfindungsgemäße Vorgehen angewendet wird.

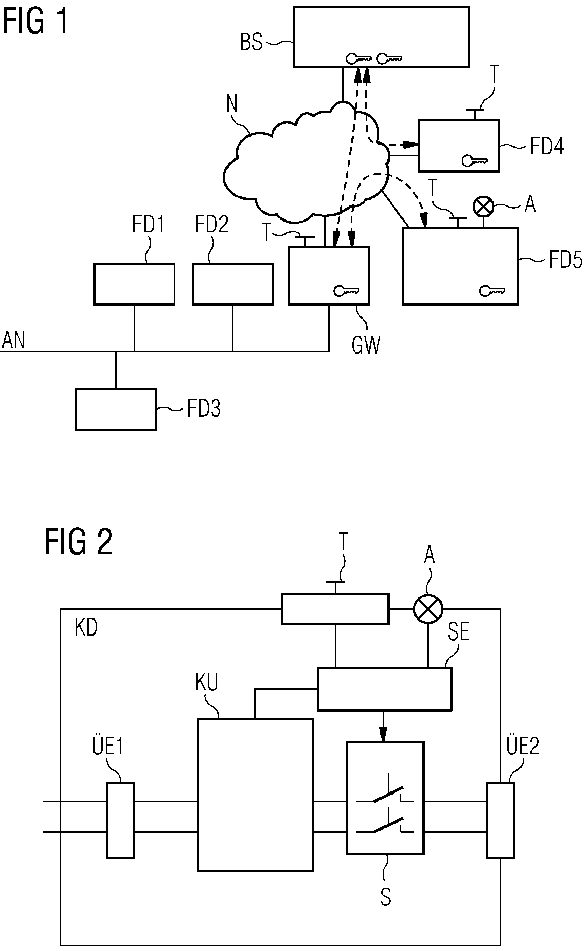

In der Figur 1 sind Geräte, beispielsweise Feldgeräte FD1 bis FD5 gezeigt. Das Feldgerät kann auch ein Mobilgerät sein, z.B. ein Mobilpanel. Diese Geräte können an ein Automatisierungsnetz AN mit einem Gateway GW, möglicherweise als VPN (Virtual Privat Network) Gateway ausbildet, angebunden sein. Sie können auch über eine Datenübertragungsschnittstelle N in Form einer Funkübertragung mit einem Backend Dienst BS verbunden sein.

Ein erstes Gerät - das Gateway GW bzw. ein Feldgerät z.B. FD4 - kann eine kryptographisch geschützte VPN-Verbindung zur Datenübertragung zu einem zweiten Gerät - z.B. einem Backend - Dienst BS oder auch zu einem weiteren Feldgerät z.B. FD 5 - aufbauen, wobei der Backend-Dienst z.B. in Form eines IoT Cloud Dienstes oder sogenannte Edge Cloud ausgebildet sein kann. Für den kryptographischen Schutz der zu übertragenden Daten kann eine Sicherheitsinformation in Form eines Schlüssels und/oder in Form eines Zertifikats verwendet werden. Dies wird in der Figur 1 mit den Schlüsselabbildungen angedeutet.

Für eine verlässliche Funkübertragung im weiteren Sinn gehören nicht nur Verfahren, die robust unter Störungen sind und bei denen QoS(Quality of Service)-Parameter, d.h. eine Übertragungsbedingungen, versucht werden einzuhalten. - Signalstärke, Signalpegel, physikalischer Fingerabdruck des zweiten Geräts (z.B. Einschwingverhalten einer elektrischen oder optischen Sendeeinheit).

Somit kann zum ersten Aspekt, bei dem die Zulässigkeit/Gültigkeit der Sicherheitsinformation an sich geprüft wird, mit einem zweiten Aspekt, bei dem eine Übertragungsbedingung überprüft wird, die neben der Sicherheitsinformation und/oder durch die Sicherheitsinformation festgelegt wird, kombiniert werden.

Zur Überprüfung der Sicherheitsinformation kann
- die Komplexität der Schlüsselparameter,
- die Gültigkeitsdauer der Sicherheitsinformation (z.B. Gültigkeitszeitraum eines digitalen Zertifikats, mit dem sich das erste Gerät gegenüber dem zweiten Gerät authentisieren kann; Gültigkeitsdauer eines zweiten Zertifikats, mit dem sich das zweite Gerät gegenüber dem ersten Gerät authentisieren kann), und
- das Änderungsdatum der Sicherheitsinformation (z.B. nach Einrichten nur für ein Jahr gültig; wenn innerhalb eines Jahres keine neuen Sicherheitsinformation erzeugt und bereitgestellt wird, wird die Datenübertragungsschnittstelle getrennt),
- die Qualität der Übertragung. Als Qualitätsmerkmale können z.B. die Signalstärke, Signalpegel, physikalischer Fingerabdruck des zweiten Geräts genutzt werden
gehören.

Die Geräte verfügen jeweils über einen Taster T zum Aktivieren einer Anlern-Funktion wie sie z.B. beim Pairing, Teach-In von Bluetooth, WLAN bekannt ist. Dabei wird eine Security-Konfiguration angelernt (z.B. bei Erstinbetriebnahme, auf Tastendruck). Das Anlernen kann prozessual geschützt sein (z.B. nur in einem kurzen Zeitabschnitt möglich), oder durch technische Maßnahmen (z.B. Eingabe oder Prüfen einer PIN oder eines Passworts durch einen Nutzer). Solange keine Security-Konfiguration eingerichtet ist, wird zumindest eine Datenübertragungsschnittstelle gesperrt. Weiterhin kann eine Anzeige vorhanden sein, z.B. eine Alarmleuchte A, die anzeigt, dass eine Datenübertragungsschnittstelle gesperrt ist.

Eine Sicherheitsinformation kann weiterhin durch eine Schlüsselgenerierung z.B. eines Geräteauthentisierungsschlüssels unter Nutzung eines True Random Number Generators gebildet werden, oder indem eine Sicherheitskonfiguration über eine Service-Schnittstelle durch das Gerät geladen wird, oder indem ein Konfigurationsmodul mit einer gespeicherten Sicherheitskonfiguration mit dem Gerät verbunden wird und die auf dem Konfigurationsmodul gespeicherte Sicherheitskonfiguration durch das Gerät ausgelesen oder benutzt wird.

Figur 2 zeigt eine Verschlüsselungs- bzw. Entschlüsselungseinheit KD, die in ein erstes Gerät z.B. FD4 bzw. GW aber auch in umgekehrter Übertragungsrichtung in ein Gerät FD5 integriert sein kann. Diese Einheit KD umfasst eine Sicherheitseinheit SE, die die Sicherheitsinformation erzeugt und einer Verarbeitungseinheit KU zur Durchführung der kryptographischen Operation, d.h. das kryptographische Schützen von zu übertragenen Daten mit Hilfe der Sicherheitsinformation, bereitstellt. Das oben genannte Konfigurationsmodul kann hierbei mit der Sicherheitseinheit SE verbunden sein bzw. werden oder auch in diese Einheit SE integriert sein. Des Weiteren weist die Einheit KD eine externe Datenübertragungseinheit ÜE1 und eine interne Datenübertragungseinheit ÜE2 auf. Diese Einheiten können integriert sein oder auch mit der Einheit KD "von außen" gekoppelt werden.

Der Datenpfad von der Verarbeitungseinheit KU zu einer internen Datenübertragungseinheit ÜE2 kann durch einen Schalter S elektrisch unterbrochen werden. Der Schalter kann von der Verarbeitungseinheit angesteuert werden, der die Security-Konfiguration verwaltet bzw. die Sicherheitsinformation erzeugt und bereitstellt.

Solange keine Security-Konfiguration durch ein Anlernen erfolgreich eingerichtet wurde, bleibt die interne Datenübertragungseinheit ÜE2 physikalisch unterbrochen. Dadurch ist sichergestellt, dass keine Daten des internen Netzes versehentlich übertragen werden können, oder dass das interne Netzwerk im unkonfigurierten Zustand beeinflusst werden kann.
Erst nachdem eine kryptographische Konfiguration eingerichtet ist, ist physikalisch eine Datenübertragung möglich. In einer Ausführungsform wird die Qualität der eingerichteten Konfiguration geprüft. Nur wenn diese vorgegebenen Mindestkriterien erfüllt (z.B. Schlüssellänge, Passwortkomplexität) sind, wird die Datenübertragung physikalisch ermöglicht. In einer weiteren Ausführungsform wird eine Übertragungsbedingung überprüft, z.B. eine Signalqualität eines empfangenen Übertragungssignals. Dadurch kann eine physikalische Manipulation an der Verkabelung der Datenübertragung erkannt werden. Dazu kann in einer Variante das Reflektionsverhaltens der Datenübertragungsleitung mittels einer Time-Domain-Reflektometer-Funktionalität des Gerätes überprüft werden. Weiterhin ist es möglich, die Integrität des Gerätes, z.B. der Firmware-/Software-Komponenten und die korrekte Funktion von kryptographischen Implementierungen zu verifizieren.

Der Status (unterbrochen/aktiv) kann über eine Anzeige, z.B. eine LED, angezeigt werden.
In einer weiteren Ausführungsform wird statt der direkten Auftrennung des Datenpfades eine wesentliche Komponente der physikalischen Übertragungseinheit deaktiviert, beispielsweise die Stromversorgung für die LED eines Lichtwellenleiterausgangs.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw..

Die Instruktionen können in lokalen Speichern abgelegt sein, es ist aber auch möglich, die Instruktionen auf einem entfernten System abzulegen und darauf via Netzwerk zuzugreifen.

Der Begriff "Prozessor", "zentrale Signalverarbeitung", "Steuereinheit" oder "Datenauswertemittel", wie hier verwendet, umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein.

## Patentansprüche

1. Verfahren zur kryptographisch geschützten Datenübertragung zwischen einem ersten Gerät (FD4; GW) und einem zweiten Gerät (FD5), aufweisend folgende Schritte:
- Erzeugen einer Sicherheitsinformation im ersten Gerät und Bereitstellen der Sicherheitsinformation,
- Übertragen von Daten zwischen dem ersten und dem zweiten Gerät über eine Datenübertragungsschnittstelle (N), welche kryptographisch mit Hilfe der Sicherheitsinformation geschützt werden, wenn die Sicherheitsinformation als zulässig und/oder als gültig überprüft worden ist,
- ansonsten physikalische Trennung der Datenübertragungsschnittstelle (N) zum zweiten Gerät.

2. Verfahren nach dem vorhergehenden Anspruch, **dadurch gekennzeichnet, dass** die Sicherheitsinformation eine Übertragungsbedingung für das Übertragen der Daten umfasst und das Übertragen der Daten zwischen erstem und zweitem Gerät nur dann durchgeführt wird, wenn die Übertragungsbedingung erfüllt ist.

3. Verfahren nach einem der vorhergehenden Ansprüche, **dadurch gekennzeichnet, dass** die Datenübertragungsschnittstelle (N) durch
- Koppelung einer dem ersten Gerät zugeordneten ersten Datenübertragungseinheit (ÜE2) mit einem dem zweiten Gerät zugeordneten zweiten Datenübertragungseinheit erreicht wird, wobei die erste Datenübertragungseinheit (ÜE2) eine physikalisch von dem ersten Gerät trennbare Einrichtung ist und/oder die zweite Datenübertragungseinheit eine physikalisch von dem zweiten Gerät trennbare Einrichtung ist.

4. Verfahren nach dem vorhergehenden Anspruch, **dadurch gekennzeichnet, dass** die physikalische Trennung der Datenübertragung mittels Deaktivierung der ersten und/oder zweiten Datenübertragungseinheit durchgeführt wird.

5. Verfahren nach einem der vorhergehenden Ansprüche 3 oder 4, **dadurch gekennzeichnet, dass** die physikalische Trennung der Datenübertragung mittels Abkopplung der ersten und/oder zweiten Datenübertragungseinheit von einer Stromversorgung durchgeführt wird.

6. Verfahren nach einem der vorhergehenden Ansprüche, **dadurch gekennzeichnet, dass** die physikalische Trennung der Datenübertragung mittels eines Schalters (S) durchgeführt wird.

7. Verfahren nach einem der vorhergehenden Ansprüche, **dadurch gekennzeichnet, dass** die Überprüfung auf Zulässigkeit und/oder Gültigkeit der Sicherheitsinformation eine Überprüfung auf ein Fehlen der Sicherheitsinformation und/oder eine Überprüfung auf eine fehlerhafte und/oder unvollständige Sicherheitsinformation und/oder eine Überprüfung auf eine abgelaufene Gültigkeitsdauer der Sicherheitsinformation umfasst.

8. Vorrichtung (FD4; GW) zur kryptographisch geschützten Datenübertragung zu einem Gerät (FD5), aufweisend:
- Mittel (SE) zum Erzeugen einer Sicherheitsinformation im ersten Gerät und Bereitstellen der Sicherheitsinformation,
- Mittel zum Übertragen von Daten zum Gerät über eine Datenübertragungsschnittstelle (N), welche kryptographisch mit Hilfe der Sicherheitsinformation schützbar sind oder geschützt werden, wenn die Sicherheitsinformation als zulässig und/oder als gültig überprüft ist,
- ansonsten Einsatz von Mitteln zur physikalischen Trennung der Datenübertragungsschnittstelle (N) zum Gerät.

9. Vorrichtung nach dem vorhergehenden Anspruch, **dadurch gekennzeichnet, dass** die Sicherheitsinformation eine Übertragungsbedingung für das Übertragen der Daten umfasst und das Übertragen der Daten nur dann durchführbar ist, wenn die Übertragungsbedingung erfüllt ist.

10. Vorrichtung nach einem der vorhergehenden Vorrichtungsansprüche, **dadurch gekennzeichnet, dass** die Datenübertragungsschnittstelle (N) durch
- Koppelung einer der Vorrichtung zugeordneten Datenübertragungseinheit (ÜE2) erreichbar ist, wobei die Datenübertragungseinheit eine physikalisch von der Vorrichtung trennbare Einrichtung ist.

11. Vorrichtung nach dem vorhergehenden Anspruch, **dadurch gekennzeichnet, dass** die physikalische Trennung der Datenübertragung mittels Deaktivierung der ersten Datenübertragungseinheit (ÜE2) durchführbar ist.

12. Vorrichtung nach einem der vorhergehenden Ansprüche 10 oder 11, **dadurch gekennzeichnet, dass** die physikalische Trennung der Datenübertragung mittels Abkopplung der ersten Datenübertragungseinheit (ÜE2) von einer Stromversorgung durchführbar ist.

13. Vorrichtung nach einem der vorhergehenden Vorrichtungsansprüche, **dadurch gekennzeichnet, dass** die physikalische Trennung der Datenübertragung mittels eines Schalters durchführbar ist.

14. Vorrichtung nach einem der vorhergehenden Vorrichtungsansprüche, **dadurch gekennzeichnet, dass** die Überprüfung auf Zulässigkeit und/oder Gültigkeit der Sicherheitsinformation eine Überprüfung auf ein Fehlen der Sicherheitsinformation und/oder eine Überprüfung auf eine fehlerhafte und/oder unvollständige Sicherheitsinformation und/oder eine Überprüfung auf eine abgelaufene Gültigkeitsdauer der Sicherheitsinformation umfasst.

15. Computerprogrammprodukt mit Programmcodemitteln zur Durchführung des Verfahrens nach einem der vorangehenden Verfahrensansprüche, wenn es auf der Vorrichtung nach einem der vorangehenden Ansprüche 8 bis 14 abläuft oder auf einem computerlesbaren Medium gespeichert ist.
